# EUROPÄISCHE PATENTANMELDUNG

(11) **EP 4 066 944 A1**
(43) Veröffentlichungstag der Anmeldung: **05.10.2022**
(21) Anmeldenummer: 21166175.6
(22) Anmeldetag: 31.03.2021
(51) Int. Cl.: B05B 3/10, F16N 7/36, B05B 13/06, B05B 3/00, B05B 3/02, B05B 12/00

(54) **VORRICHTUNG ZUM AUSBRINGEN EINES FLÜSSIGEN ODER PASTÖSEN MEDIUMS, INSBESONDERE EINES SCHMIERSTOFFES**

(71) Anmelder: D + P Dosier & Prüftechnik GmbH, 86720 Nördlingen (DE)
(72) Erfinder: Faaß, Tobias, 86720 Nördlingen (DE); Straß, Karl Andreas Robert, 86759 Wechingen (DE); Gerstmayr, Manfred, 86757 Wallerstein (DE)
(74) Vertreter: Cremer & Cremer

(57) **Zusammenfassung**

Die vorliegende Erfindung betrifft eine Vorrichtung (1) zum Ausbringen eines flüssigen oder pastösen Mediums, insbesondere Schmierstoff, Schmierfett, Schmieröl, Klebstoff, Dichtstoff oder Funktionswerkstoff. Die Vorrichtung ist so ausgelegt, dass ein maximales Volumen des Mediums von 100 g/min, insbesondere von 60 g/min, ausgebracht werden kann. Das Ausbringen erfolgt durch eine rotierende Bewegung und dient insbesondere zum Benetzen eines Hohlraumes mit dem Medium. Die Vorrichtung umfasst zumindest einen Medienförderkanal (6), in welchem das auszubringende Medium gefördert werden kann, einen Antrieb (2), insbesondere ein Elektromotor, mit einer Ankerwelle (7), welche rotierbar ist, und eine Ausbringdüse (10), aus welcher das Medium ausbringbar ist. Erfindungsgemäß ist die Ankerwelle des Antriebs eine Hohlwelle, in deren Inneren der zumindest eine Medienförderkanal zumindest teilweise verläuft, wobei die Ankerwelle durch den Antrieb hindurch und aus ihm heraus geführt ist, und dass das Medium aus dem zumindest einen Medienförderkanal durch die Ausbringdüse hindurch ausbringbar ist. Neben einer Vorrichtung ist auch ein Verfahren zum Ausbringen eines flüssigen oder pastösen Mediums, insbesondere Schmierstoff, Schmierfett, Schmieröl, Klebstoff, Dichtstoff oder Funktionswerkstoff, vorgeschlagen.

## Beschreibung

Die vorliegende Erfindung betrifft eine Vorrichtung zum Ausbringen eines flüssigen oder pastösen Mediums, wobei die Vorrichtung so ausgelegt ist, dass ein maximales Volumen des Mediums von 100 g/min, insbesondere von 60 g/min, ausgebracht werden kann. Das Medium wird bei der vorliegenden Vorrichtung durch eine rotierende Bewegung ausgebracht. Solche Vorrichtungen werden vor allem dazu benutzt, Hohlräume mit dem Medium zu benetzen. Als infrage kommende Medien seien insbesondere Schmierstoffe wie Schmierfette oder Schmieröle genannt, aber auch Klebstoffe, Dichtstoffe oder Funktionswerkstoffe anderer Art.

Weiterhin behandelt die vorliegende Erfindung ein Verfahren zum Ausbringen eines flüssigen oder pastösen Mediums durch eine rotierende Bewegung.

Mit anderen Worten: Die vorliegende Erfindung behandelt eine Vorrichtung zum Ausbringen eines flüssigen oder pastösen Mediums nach dem Oberbegriff von Patentanspruch 1 sowie ein Verfahren zum Ausbringen eines flüssigen oder pastösen Mediums nach dem Oberbegriff von Patentanspruch 13.

### Technisches Gebiet

Im Stand der Technik sind sog. Rotorbefetteinheiten bekannt, mit denen Schmierstoffe ausgebracht werden. Ihnen obliegt in der Maschinen-, Automatisierungs- und Prozesstechnik generell die Aufgabe der möglichst mengengenauen, unterbrechungsfreien und homogenen, lokal eingrenzbaren oder flächendeckenden Applikation von Prozessmedien. Diese zeichnen sich durch sehr unterschiedliche physikalische und chemische Eigenschaften aus.

Die Anwendungsbandbreite an Prozessmedien und Anwenderszenarien zeichnet sich durch eine besondere Vielfalt aus, die sich wiederum aus der Vielzahl der Einsatzszenarien, der charakteristischen Materialeigenschaften der auszubringenden Medien, ihrer Bereitstellung, der bei Lagerung und Applikation vorherrschenden Medien- und Umgebungsbedingungen (z. B. Temperatur, Feuchte), eingesetzter und nötiger Prozessdrücke, des chemischen Reaktionsverhaltens und der möglichen korrosiven Wirkung der Prozessmedien sowie vor allem ihrer Viskosität ergibt. Letztere reicht von flüssigen bis zu nahezu festen, hochviskosen und klebrigen, kaum noch fließfähigen Prozessmedien. Repräsentativ, aber nicht ausschließlich genannt seien an dieser Stelle Fluide jeglicher Art, Öle, Lacke, Schmiermittel wie z. B. Fette, Gele, Pasten, flüssige Polymere.

Erschwerend kommt beim flächigen Aufbringen von Prozessmedien die Anforderung hinzu, die Prozessmedien möglichst homogen und wiederholgenau in unterschiedlichsten Schichtdicken, Fördermengen bzw. Fördervolumina kontrolliert und in ihrer Menge feindosiert auf allen nur denkbaren Freiformflächen und in engsten, schwer zugänglichen Bauräumen zu applizieren.

Als eingängige repräsentative Beispiele seien die flächenhaft aufzubringende Schmierfettdosierung auf zylinderförmig ausgeprägten Wirkflächen genannt, wie sie beispielsweise im Motorenbau, bei der Montage von Pumpen, Stoßdämpfern oder Hubzylindern jeglicher Art zum Einsatz kommen. Letztere zeichnen sich vor allem durch kleinste Zylinderdurchmesser von häufig weniger als 100 mm Durchmesser aus, die für ein automatisiertes ebenso wie für ein manuell geführtes Applikationssystem nur eingeschränkt bis häufig gar nicht zu erreichen sind. In der Konsequenz ist es äußerst kompliziert oder bisher in vielen Fällen unmöglich, einen flächenhaft und vollständig benetzenden Auftrag von Prozessmedien, insbesondere von höherviskosen Schmierfetten, in Innenbereichen von Hohlräumen, Vertiefungen und zylinderförmigen Bauteilen sicherzustellen.

### Stand der Technik

Im Stand der Technik sind Vorrichtungen auf dem Markt, die als Rotorbefetteinheiten, als Schleuderscheibenapplikator oder Schleuderscheibendispenser bekannt sind. Die vorliegende Erfindung zielt darauf ab, derartige Vorrichtungen zu verbessern.

Aus der WO 2017/050436 A1 ist eine derartige Vorrichtung bekannt. Hierbei wird eine Welle durch einen Motor in Rotation versetzt. Am gegenüberliegenden Ende ist eine Schleuderscheibe angebracht. Mit Hilfe eines Ventils wird das Medium auf die Schleuderscheibe aufgespritzt. Durch die Rotation des Schleuderkopfes wird das Medium von dieser Schleuderscheibe weggeschleudert und beispielsweise an den Innenwänden eines mit dem Medium zu benetzenden Hohlraums verteilt.

Bei der PCT-Anmeldung WO 2007/006325 A1 wird ein Gerät mit einer ähnlichen Materialzufuhr beschrieben wie bei der WO 2017/050436 A1. Flüssiges Material wird auf einen Rotorteller aufgebracht. Der Rotorteller wird über einen Motor in Rotation versetzt. Die Düse, aus welcher das zu verteilende Medium auf den Rotorteller aufgespritzt wird, ist parallel zu der rotierenden Welle angebracht. Bei der WO 2017/050436 A1 wird das auszubringende Medium mit einem gewissen Abstand auf die Schleuderscheibe aufgespritzt. Anders hier: Hier wird die zuführende Einheit relativ nah an den Rotorteller herangeführt.

Bei dem Schmierstoffverteiler nach DE10 2018 216 483 A1, auch als Rotationsöler bezeichnet, wird das Schmiermittel über einen Schmiermittelkanal in ein Schmiermittelrohr eingebracht, dann ausgangsseitig einem weiteren Schmiermittelkanal zugeführt, um schließlich an der Spitze des Gerätes der Schmiereinheit zugeführt zu werden. Ein Motor treibt eine Welle an, und über weitere Zwischenstufen wird ein sogenannter Grundkörper in Rotation versetzt. Sowohl die Schmiermittelzufuhrkanäle als auch die Antriebswelle und der rotierende Grundkörper sind in einer gemeinsamen Hülse untergebracht.

Schließlich sei noch die chinesische Patentanmeldung CN 107983595 A genannt. Ähnlich wie bei dem vorstehend zitierten deutschen Dokument ist wiederum um die rotierende Welle herum eine Hülse vorgesehen. Innerhalb dieser Hülse wird auszubringendes Medium zu der Schleuderscheibe geführt.

### Aufgabenstellung

Allem vorbekannten Stand der Technik ist nachteilig, unabhängig davon, ob eine die rotierende Welle umgebende Hülse mit innenliegender Medienzuführung eingesetzt wird oder ob über eine Düse unmittelbar von außen auf die Schleuderscheibe das Medium aufgebracht wird, dass der Aufbau insgesamt verhältnismäßig groß ist. In der Praxis bedeutet dies, dass der Mindestdurchmesser des Bereichs, der in den zu benetzenden Hohlraum eingebracht wird, bei 20 mm und größer liegt. Die kleinsten befettbaren Durchmesser liegen entsprechend in einer Größenordnung von 30 mm. Vertiefungen oder Zylinder oder andersartige Hohlräume mit geringeren Durchmessern können folglich nicht mit im Stand der Technik bekannten Rotorverteilvorrichtungen befettet oder beispielsweise mit Klebstoff oder anderen Medien benetzt werden. Stattdessen müssen die Medien beispielsweise mit einem Pinsel per Hand aufgebracht werden.

Aufgabe der vorliegenden Erfindung ist daher, bekannte Vorrichtungen, bei denen das Medium mittels einer rotierenden Bewegung ausgebracht wird, so zu verbessern, dass auch Hohlräume mit kleineren Durchmessern damit benetzt werden können.

### Erfindungsbeschreibung

Diese Aufgabe wird gelöst durch eine Vorrichtung nach Patentanspruch 1 und ein dazugehöriges Verfahren nach Patentanspruch 13. Vorteilhafte Ausgestaltungen sind Gegenstand der Unteransprüche.

Die erfindungsgemäße Vorrichtung dient zum Ausbringen eines flüssigen oder pastösen Mediums durch eine rotierende Bewegung. Als geeignete Medien sind Schmierstoffe wie Schmierfette und Schmieröle, Klebstoffe, Dichtstoffe oder beispielsweise auch Funktionswerkstoffe anderer Art anzusehen.

Die erfindungsgemäße Vorrichtung ist dabei so ausgelegt, dass als maximale Volumenströme 100 g/min an Medium ausgebracht werden können, bevorzugt wird ein maximales Volumen an Medium von 60 g/min ausgebracht. Die Vorrichtung muss folglich dazu in der Lage sein, so geringe Volumenströme auszubringen.

Bei Medienabgabegeräten, die zum Befetten oder Beölen oder zur Applikation von Klebstoffen oder ähnlichen Medien dienen, wie z. B. bei Rotorbefetteinheiten, ist es wichtig, dass ein verhältnismäßig geringes Volumen, dies aber möglichst ortsgenau, ausgebracht werden kann.

Das technische Gebiet ist dort anzusiedeln, wo die Innenoberflächen von Hohlräumen oder Vertiefungen mit einem Medium zu benetzen sind. Wie der Aufgabe zu entnehmen ist, geht es dabei um das Benetzen von verhältnismäßig kleinen Innendurchmessern, bevorzugt um Innendurchmesser in einer Größenordnung von kleiner als 30 mm.

Wie bereits erwähnt, wird das Medium durch eine rotierende Bewegung aus der erfindungsgemäßen Vorrichtung ausgetragen. Mit anderen Worten, das Medium wird aus der Vorrichtung durch eine Schleuderbewegung ausgebracht oder, noch einmal anders ausgedrückt, es wird aus der Vorrichtung herausgeschleudert. Die Verteilung des Mediums erfolgt mit Hilfe einer rotierenden Bewegung.

Die erfindungsgemäße Vorrichtung umfasst zumindest einen Medienförderkanal, in welchem das zu verteilende Medium gefördert werden kann. Das Medium wird durch im Stand der Technik bekannte Mittel, beispielsweise mithilfe einer Förderpumpe, der erfindungsgemäßen Vorrichtung zugeführt. In der Vorrichtung selbst wird das auszubringende Medium in einem Medienförderkanal geführt.

Ferner ist ein Antrieb mit einer rotierbaren Ankerwelle vorgesehen. Typischerweise wird als Antrieb ein Elektromotor verwendet.

Das Medium verlässt die erfindungsgemäße Vorrichtung über eine Ausbringdüse.

Nach der vorliegenden Erfindung ist die Ankerwelle des Antriebs eine Hohlwelle, in deren Innerem der zumindest eine Medienförderkanal zumindest teilweise verläuft. Die Ankerwelle wird durch den Antrieb hindurch und aus ihm heraus geführt. Mit anderen Worten, es wird die im Motor vorhandene Welle verlängert und aus dem Antrieb heraus geführt. Im Inneren dieser Ankerwelle verläuft der Medienförderkanal zumindest teilweise. Das Medium ist aus dem zumindest einen Medienförderkanal durch die Ausbringdüse hindurch ausbringbar.

Anders als im Stand der Technik wird somit das Medium nicht auf der Außenseite der rotierenden Welle geführt, sondern in dessen Innerem.

Hierdurch ergibt sich eine wesentliche Bauraumverkleinerung, sodass nun auch sehr viel kleinere Innendurchmesser als solche mit 30 mm mit dem Medium benetzt, beispielsweise befettet oder mit Klebstoff versehen, werden können.

Mit anderen Worten, der Kern der Erfindung liegt darin, dass der Anker des Rotors genutzt wird, indem die im Motor sowieso gelagerte Welle für die Medienzufuhr genutzt und hierfür verlängert und durch den Motor hindurch geführt wird. Die im insbesondere Elektromotor sowieso vorhandene und gelagerte Welle wird zum einen in die eine Richtung verlängert und an die Medienzufuhr angeschlossen, also pumpenseitig bzw. fassseitig verlängert. Zum anderen wird sie in die andere Richtung, also in Austragrichtung, verlängert, und dort wird dann eine entsprechende Ausbringvorrichtung mit Ausbringdüse befestigt.

Eine erfindungsgemäß geschaffene Rotorbefetteinheit als Beispiel für eine erfindungsgemäße Vorrichtung mit innenliegender, in die Rotationsachse des antreibenden Motors unmittelbar integrierter lateraler Medienförderung, nutzt die Vorteile der im Schleuderverfahren erreichbaren Homogenität einer Flächenabscheidung von Prozessmedien, insbesondere Schmierfetten höherer Viskosität. Sie zeichnet sich durch eine spezielle, erstmals unmittelbar in den Rotor und damit in die Ankerwelle der Antriebsachse integrierte Führung des Medienförderkanals aus, wodurch sich mit dieser speziellen Anordnung eine neuartige, in ihrer Baugröße erheblich verkleinerte Abgabeeinheit ergibt, die die Nachteile der durch die bisherige Realisierung eines Förderkanals und einer innenliegenden Lagerung der rotierenden Welle überwindet.

Durch die erfindungsgemäße Maßnahme lässt sich der erreichbare Durchmesser spürbar verbessern. Beim derzeitigen Entwicklungsstand im Hause der Anmelderin konnte der Ausbringkopf auf einen Durchmesser von 3 mm verringert werden, sodass bereits Innendurchmesser mit einem Durchmesser von ungefähr 5 - 8 mm mit dem vorliegenden Gerät beölt werden konnten.

Neben der vorstehend erläuterten Bauraum-Verringerung ergeben sich noch zahlreiche weitere Vorteile:
a. Es ist keine Kupplung erforderlich. Bei dem Stand-der-Technik-Gerät im Hause der Anmelderin sowie bei den einleitend beschriebenen Geräten war eine Kupplung im bzw. nach dem Motor erforderlich, um den Drehteller mit der Motorwelle zu verbinden. Diese entfällt nun vollständig, weil die Motorwelle selbst unmittelbar genutzt wird.
b. Auch jegliche Drehlager etc. entfallen. Die einzige Welle wird unmittelbar zum Anbringen von weiteren Komponenten genutzt.
c. Es ist eine unmittelbare Drehzahlüberwachung des Schleudertellers bzw. Ausbringkopfes möglich. Die Drehzahl des Schleudertellers entspricht exakt der Drehzahl des Motors. Die Motordrehzahl kann jedoch sowohl einfach überwacht werden als auch entsprechend einfach eingestellt werden. Dies bringt noch den weiteren Vorteil mit sich, dass feinstfühlig durch eine Motordrehzahlanpassung auch das Ausschleudern des Mediums angepasst werden kann.
d. Das ganze Gerät baut sehr viel kleiner als vorhandene Geräte, wie bereits kurz angesprochen. Also hat man nicht nur den Vorteil, dass sehr viel kleinere Durchmesser befettbar sind, sondern insgesamt baut das ganze Gerät auch noch sehr viel kleiner. Dadurch kann die erfindungsgemäße Vorrichtung beispielsweise an einem Roboter unproblematisch angebracht werden. Bei den alten Einheiten war die Ausdehnung in Z-Richtung problematisch und sie konnte deshalb in der Regel nicht an einem Roboter befestigt werden.
e. In einer bevorzugten Ausführung wird keine Prallscheibe eingesetzt, stattdessen werden bevorzugt Aufsätze verwendet, auch als Ausbringköpfe bezeichnet, aus welchen durch Bohrungen hindurch das Medium austreten kann. Hierdurch ist eine exaktere Ausrichtung des Medienstrahls, als es mit einem Drehteller oder Prallteller möglich ist, möglich.
f. Es gibt kein Totvolumen. Beim Stand der Technik war ein Totvolumen vorhanden, in welchem auszubringendes Medium stehenblieb.
g. Aufgrund des Wegfalls von Kupplungen und Drehlagern ist sehr viel weniger Wartung notwendig bzw. können längere Wartungsintervalle vorgesehen werden. Auch die Zahl der Verschleißteile ist geringer als bei herkömmlichen Rotorbefetteinheiten.
h. Ferner vorteilhaft ist, dass auf eine zur Feststellung der tatsächlichen Umdrehungszahl und damit zur feinteiligen Bestimmung der abgegebenen Menge bzw. Volumina an Prozessmedien in früheren Realisierungsformen bzw. im Stand der Technik zusätzlich nötige Sensorik zur Ermittlung der abtriebseitigen Ist-Drehzahl und eine hierzu erforderliche Auswerteelektronik auf Grund des Wegfalls von Kupplungselementen verzichtet werden kann.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Aufsätze, auch Ausbringköpfe genannt, in welchen die Ausbringdüse(n), auch als Auslassdüse(n) bekannt, vorhanden sind, werden in Abhängigkeit von dem auszubringenden Medium und in Abhängigkeit von der gewünschten Benetzungsart ausgewählt - ähnlich wie beim Stand der Technik; auch hier entscheidet das auszubringende Medium sowie die zu benetzende Oberfläche darüber, welche Art an Schleuderteller genau eingesetzt werden muss bzw. kann.

Nach einer bevorzugten Ausführungsform der Erfindung ist die Ausbringdüse, insbesondere der Ausbringkopf, mit der Ankerwelle kupplungsfrei und/oder drehdurchführungsfrei und/oder drehlagerfrei verbunden. Wie bereits vorstehend erwähnt, ist die vorliegende Erfindung insofern sehr vorteilhaft, als Getriebe, Kupplungen, Drehdurchführungen oder Drehlager entfallen.

Die Ausbringdüse oder der Ausbringkopf ist mit der Ankerwelle beispielsweise durch eine Verschraubung verbunden. Sie rotiert mit derselben Geschwindigkeit wie die Ankerwelle, weder eine Über- noch eine Untersetzung sind erforderlich und gewünscht. Somit lässt sich aus der Drehzahl der Ankerwelle, die problemlos überwachbar und regelbar ist, unmittelbar auf die Rotationsgeschwindigkeit, also die Drehzahl, des Ausbringkopfes mit Ausbringdüse schließen.

Wie bereits vorstehend erwähnt, ist die Ausbringdüse bzw. der Ausbringkopf mit Ausbringdüse(n) mit der Ankerwelle über eine mechanische Verbindung, insbesondere über eine Schraubverbindung, lösbar verbunden. Hierdurch lassen sich je nach Anwendungsgebiet die Ausbringköpfe bzw. Ausbringdüsen beliebig austauschen.

Nach einer bevorzugten Ausführung der Erfindung ist das Ende der Ankerwelle, das auf der Seite der Ausbringdüse liegt, sowohl auf der Innenseite als auch auf der Außenseite jeweils bereichsweise mit einem Gewinde ausgestattet. Auf diese Art und Weise kann der Ausbringkopf bzw. die Ausbringdüse sowohl auf das Außengewinde als auch auf das Innengewinde aufgeschraubt bzw. eingeschraubt werden. So können besonders kleine Ausbringköpfe, wie sie beispielsweise für das Ausbringen von flüssigen Medien wie Schmierölen eingesetzt werden können, mit dem Innengewinde der Ankerwelle verschraubt werden. Hierdurch lässt sich nochmals Bauraum sparen, und der Ausbringkopf bzw. die Ausbringdüse kann entsprechend noch kleiner gestaltet werden. Für pastöse Medien wie beispielsweise Schmierfette, also Medien mit einer höheren Viskosität, müssen jedoch nach derzeitigem Stand der Erkenntnisse größere Ausbringköpfe vorgesehen werden. Auch ist eine Verengung im Inneren des Medienförderkanals, wie sie durch das Verschrauben mit einem Innengewinde zwangsläufig auftritt, für höherviskose Medien nachteilig. Aus diesem Grunde werden Ausbringdüsen für Medien mit einer höheren Viskosität bevorzugt auf dem Außengewinde der Ankerwelle befestigt, das heißt, die Ausbringköpfe sind mit einem entsprechenden Innengewebe versehen und werden mit dem Außengewinde verschraubt. Hierdurch lässt sich ein durchgehender Medienförderkanal bis zum Ende des Ausbringkopfes gestalten, sodass es auch bei pastösen Medien nicht zu einem Rückstau des Mediums im Medienförderkanal oder im Bereich der Ausbringdüse kommt.

Nach einer bevorzugten Ausführung ist eine Drehzahlüberwachung und Drehzahlregelung für den Antrieb vorgesehen, sodass über die Drehzahl der Ankerwelle die Drehgeschwindigkeit der Rotationsbewegung, mit der das Medium ausgebracht wird, einstellbar bzw. veränderbar ist.

Bevorzugt ist die Ankerwelle momentenfrei gelagert. Hierdurch wird die Laufruhe verbessert.

Als Ausbringdüsen, auch genannt Ausbringkopf oder Schleuderkopf oder Rotationskopf, sind sämtliche Varianten, wie sie auch im Stand der Technik bekannt sind, einsetzbar. So kann die Ausbringdüse beispielsweise eine Prallscheibe sein, oder es kann sich um einen Aufnahmebehälter mit zumindest einer Öffnung, wobei die Öffnung typischerweise an der Seite angebracht ist, oder um einen Aufnahmebehälter mit mehreren um den Umfang des Aufnahmebehälters herum verteilt angeordneten Öffnungen handeln. Die Wahl des geeigneten Ausbringkopfes hängt, wie dem Fachmann bekannt ist, vom auszubringenden Medium ab.

Das auszubringende Medium wird der erfindungsgemäßen Vorrichtung bevorzugt über eine Dosiervorrichtung zugeführt. Die Dosiervorrichtung ist auf der Eingangsseite der Ankerwelle angeordnet und mit ihr verbunden, genauer mit dem Medienförderkanal verbunden. Nach einer bevorzugten Ausführung der Erfindung kann es sich dabei um eine Mehrkammerdosiervorrichtung oder um eine Mehrkomponentendosiervorrichtung handeln, sodass beispielsweise auch Mehrkomponentenklebstoffe zugeführt und im Medienförderkanal gemischt werden können.

Nach einer bevorzugten Ausführung der Erfindung wird ein Rückfluss des Mediums zu der Dosiervorrichtung verhindert. Dies kann beispielsweise durch das Vorsehen eines Stellventils, eines Rückschlagventils und/oder einer Dichtung erfolgen.

In einer bevorzugten Ausführung sind mehrere Medienförderkanäle in der Ankerwelle vorhanden. Diese verlaufen parallel in der Ankerwelle und sind ausgangsseitig zusammengeführt und münden auf diese Art und Weise in einer einzigen Ausbringdüse. Auch auf diese Art und Weise ist ein Mehrkomponentenmedium ausbringbar bzw. in dem Medienförderkanal förderbar und wird vor dem Ausbringen in der Ausbringdüse erst vermischt. Eine derartige Anordnung eignet sich insbesondere für flüssige Mehrkomponentensysteme.

Bevorzugt ist ausgangsseitig ein Überwachungssystem, beispielsweise ein Sensor, eine Sichtanzeige oder ein Messsystem angeordnet, um das ausgebrachte Medium zu überwachen. Es lassen sich so beispielsweise Abgabemenge, Temperatur, Reinheit, Viskosität, Homogenität und/oder ein Vorhandensein von Lufteinschlüssen überwachen.

Es kann in einer bevorzugten Ausgestaltung ein Heizsystem und/oder ein Kühlsystem vorgesehen sein, um den zumindest einen Medienförderkanal zu beheizen bzw. zu kühlen. Dies kann wichtig sein, wenn die Viskosität des Mediums in einem bestimmten Temperaturbereich derart ist, dass das Ausbringen erfolgreich durchführbar ist. Durch diese Gestaltung lässt sich die Temperatur des Mediums und damit dessen Viskosität vergleichmäßigen und einstellen.

Bei dem erfindungsgemäßen Verfahren zum Ausbringen eines flüssigen oder pastösen Mediums durch eine rotierende Bewegung wird die rotierende Bewegung durch eine rotierende Hohlwelle erzeugt. Die rotierende Hohlwelle ist die Ankerwelle des Antriebs, die durch den Antrieb hindurch und aus ihm heraus geführt ist. Im Inneren dieser Hohlwelle verläuft ein Medienförderkanal, genauer zumindest ein Medienförderkanal, zumindest teilweise.

Bevorzugt ist der zumindest eine Medienförderkanal mit der Ankerwelle fest verbunden oder er ist Teil derselben. In der besonders bevorzugten Ausführungsform wird die Durchgangsbohrung der Ankerwelle als Hohlwelle als Medienförderkanal genutzt. Er rotiert folglich mit der Ankerwelle. Die Nutzung der inneren Bohrung der Hohlwelle als Medienförderkanal hat den Vorteil, dass es keiner zusätzlichen Dichtungen oder ähnlicher Bauteile bedarf, um zum Beispiel eine im Inneren geführte Hülse abzudichten.

Mit Hilfe des erfindungsgemäßen Verfahrens zum Betreiben einer Rotorbefetteinheit kann über die Medienfördereinheit ein Flächenauftrag von Prozessmedien in Bauräumen und Vertiefungen mit charakteristischen lateralen Abmessungen unter ca. 35-200 mm Länge/Breite und einer Tiefe von mehr als 10 mm erfolgen. Auf Oberflächen in zylinderförmig ausgeprägten Bauräumen mit charakteristischen Durchmessern unterhalb von ca. 35-200 mm kann der Flächenauftrag erfolgen.

Nachfolgend seien diverse weitere mögliche Eigenschaften und Anpassungen kurz angesprochen, die jeweils für sich oder auch kumuliert in der erfindungsgemäßen Vorrichtung vorgesehen sein können. In Abhängigkeit des Einsatzszenarios können Informationen zur Werkerassistenz, Fehler-, Prozess-, Selbst- und Fremddiagnose für eine Steuereinheit bereitgestellt werden, die sowohl Teil des erfindungsgemäßen Systems als auch getrennt von demselben sein kann. Die Antriebs- und/oder Steuereinheit kann Informationen für den Betrieb, insbesondere zur Werkerassistenz, aus Fehler-, Prozess-, Selbst- und Fremddiagnose sowie aus anderen, mit der Rotorbefetteinheit verbundenen steuerungs- und informationstechnischen Komponenten, beispielsweise - aber nicht ausschließlich - einer SPS, einem ERP-System, aus einer Cloud oder aus einem anderen IT-System nutzen, verarbeiten oder zur Verfügung stellen. Über die Ansteuerung und Auswertung von Messsignalen der Rotationserregung kann eine Bestimmung der an Prozessmedien abgeschiedenen Mengen oder Volumina erfolgen. Über die Drehrate der Rotationserregung kann die Verteilung der abgegebenen Dosiermedien, die Homogenität und die resultierende Dicke der flächenhaft applizierten Prozessmedien gesteuert und/oder optimiert werden. Signalverläufe und/oder deren Güte können während der Inbetriebnahme und/oder des Betriebs gemessen und bewertet werden, um allgemeine Betriebszustände und/oder Zustände der Rotorbefetteinheit und/oder ihren Anschluss an weitere elektrische, elektronische oder informationstechnische Systeme im Betrieb abzuleiten sowie insbesondere darauf basierend die Funktion der Rotorbefetteinheit und/oder der daran angeschlossenen Systeme zu diagnostizieren. Auch Prognosen zu Systemfunktion, Wartungs-, Erneuerungsbedarf und Einsatzreichweite können so abgeleitet werden. Eine kontinuierliche Signal- und/oder Datenanalyse zur Erkennung von Anomalien im Betrieb können erfolgen, um Fehlfunktionen zu erkennen und korrigierende Maßnahmen vorzunehmen oder die Herstellung eines sicheren Systemzustands einzuleiten. Eine Identifikation der Vorrichtung, beispielsweise der Rotorbefetteinheit, und ein Informationsaustausch zwischen den an der Steuerung der kinematischen Wirkkette beteiligten Komponenten und/oder Steuerungseinrichtungen erfolgt, um insbesondere eine möglichst unmittelbare Inbetriebnahme und eine reibungsarme Interaktion im Dauerbetrieb zu erzielen. Auch ein Fernzugriff oder ein Fernwirken können erfolgen und hierbei können Sensordaten und Informationen, die zwischen der Rotorbefetteinheit und weiteren informationstechnischen Komponenten ausgetauscht und insbesondere auch mit weiteren Informationen überlagert werden, beispielsweise im Sinne oder zur Unterstützung eines auf Augmented oder Virtual Reality basierenden Assistenzsystems und/oder einer Datenbrille, ausgelesen werden. Ein digitales Modell oder Abbild des Systems zur Unterstützung von Konzeption, Konfiguration, Realisierung, Inbetriebnahme, Wartung, Fehlersuche, Fehlerbehebung, Leistungs- und Prozesssimulation einer Medienapplikation kann genutzt werden. Ein digitales Modell oder Abbild des Systems kann auch unterstützend zur Optimierung des Betriebs und/oder der Prozessmedienabscheidung genutzt werden.

Die zuvor dargestellten Kombinationen und Ausführungsbeispiele lassen sich auch in zahlreichen weiteren Verbindungen und Kombinationen betrachten.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
- Figur 1: eine perspektivische Darstellung einer erfindungsgemäßen Vorrichtung;
- Figur 2: eine erste Seitenansicht der Vorrichtung nach Figur 1;
- Figur 3: eine zweite Seitenansicht der Vorrichtung nach Figur 1;
- Figur 4: einen Schnitt durch die Vorrichtung nach Figur 1 entlang der Linie A - A, eingetragen in Figur 3;
- Figur 5: eine Aufsicht auf die Vorrichtung nach Figur 1;
- Figur 6: eine Rückseitenansicht der Vorrichtung nach Figur 1;
- Figur 7: eine perspektivische Ansicht einer ersten Ausführungsform eines Ausbringkopfes (Fig. 7A) und einen Schnitt durch die Ausbringdüse (Fig. 7B);
- Figur 8: eine perspektivische Ansicht einer zweiten Ausführungsform eines Ausbringkopfes (Fig. 8A), einen Längsschnitt durch denselben (Fig. 8B) und einen Schnitt durch die Ausbringdüse (Fig. 8C);
- Figur 9: einen Längsschnitt durch eine dritte Ausführungsform eines Ausbringkopfes (Fig. 9A), einen Schnitt durch die Ausbringdüse (Fig. 9B) und eine perspektivische Ansicht desselben (Fig. 9C); und
- Figur 10: einen Längsschnitt durch eine vierte Ausführungsform eines Ausbringkopfes (Fig. 10A), eine perspektivische Ansicht desselben (Fig. 10B) und einen Schnitt durch die Ausbringdüse (Fig. 10C)
zeigen.

### Figurenbeschreibung

In den Figuren ist als ein Ausführungsbeispiel einer erfindungsgemäßen Vorrichtung eine Rotorbefetteinheit dargestellt. Rotorbefetteinheiten dienen zum Schmieren von Teilen bzw. zum Befetten von Oberflächen, genauer von Hohlräumen, Vertiefungen und Innenflächen von beispielsweise zylindrischen Objekten.

Anstelle eines Schmierstoffes kann jedoch ebenso ein Klebstoff, Dichtstoff oder Funktionswerkstoff o. Ä. als Medium eingesetzt werden. Wie vorstehend erwähnt, wird nachfolgend als bevorzugtes Ausführungsbeispiel eine Vorrichtung zum Ausbringen eines Schmierstoffes als Beispiel eines flüssigen oder pastösen Mediums beschrieben.

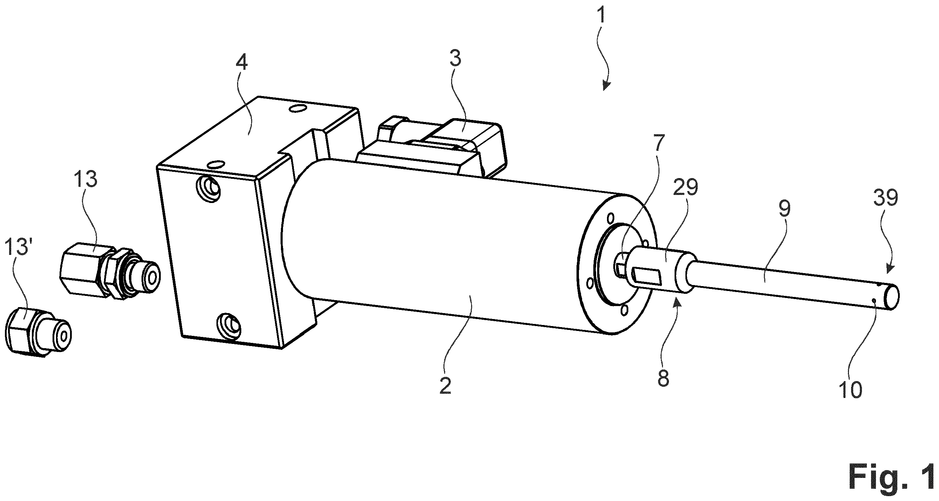

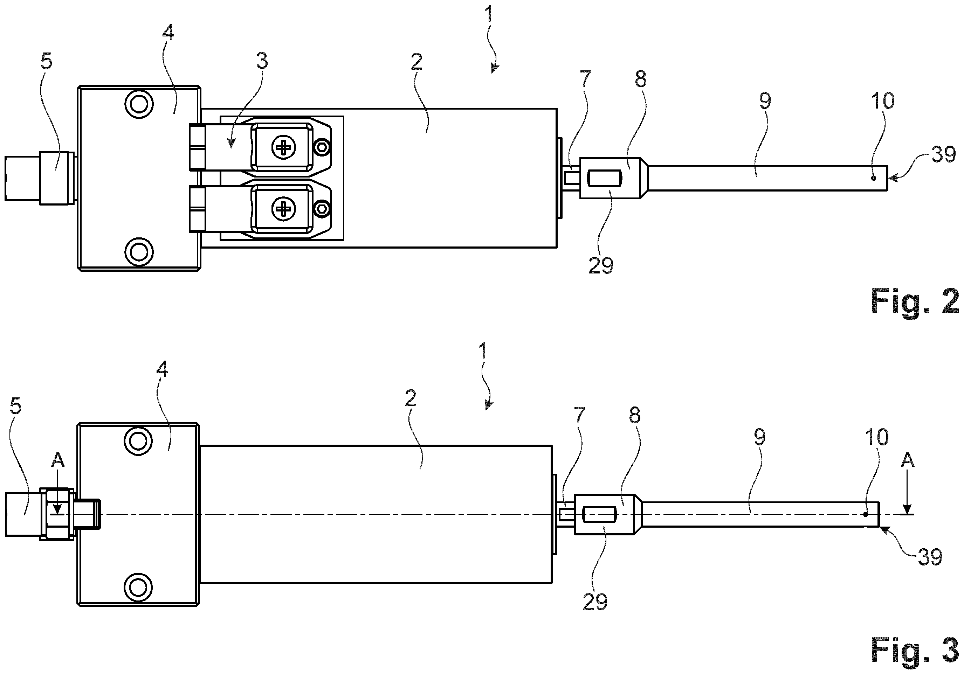

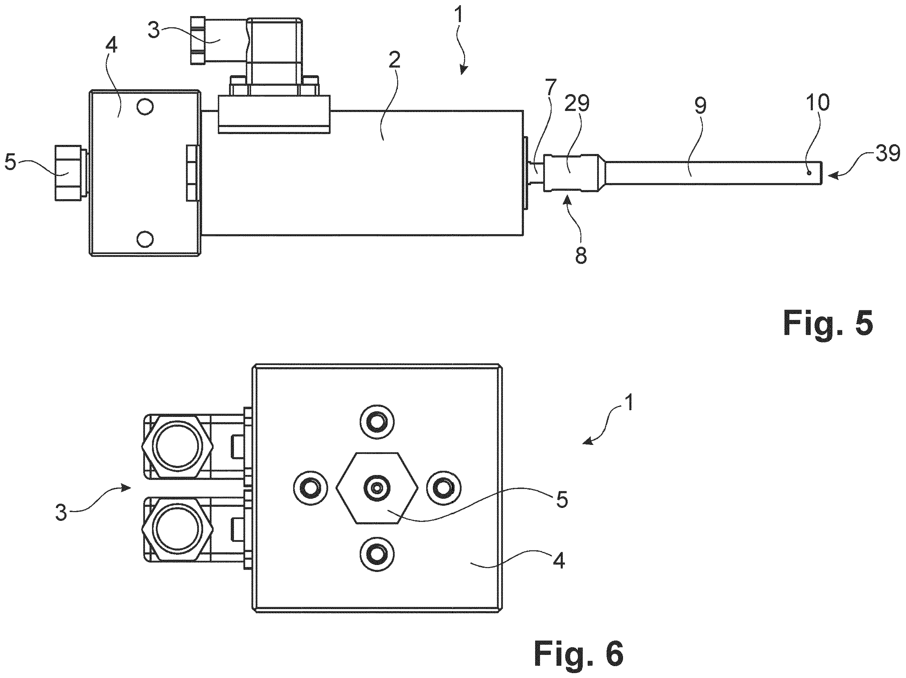

Nachfolgend wird die Vorrichtung zum Ausbringen eines Schmierstoffes, die in den Figuren 1 - 6 dargestellt ist, vereinfachend als Rotorbefetteinheit bezeichnet. Wie erläutert, handelt es sich dabei lediglich um ein Ausführungsbeispiel der Erfindung.

Im Folgenden werden die Figuren 1 - 6 gemeinsam beschrieben, um Wiederholungen zu vermeiden.

Die Rotorbefetteinheit 1 ist zusammengesetzt aus einem Antrieb 2 mit Steckverbinder 3, einem Anschlusselement 4, in welches der Medienanschluss 5 hineinführt, und einem Ausbringkopf 9 mit Ausbringdüse 10. Weiterhin sind in dem dargestellten Ausführungsbeispiel ein Anschlussstück 13 und eine Variante desselben, das Anschlussstück 13', dargestellt. Bei den Medienanschlussstücken 13, 13' handelt es sich um verschiedene Ausführungen, die dazu dienen, einen Anschluss mit einem das Medium bereitstellenden Schlauch oder Leitung herzustellen, beispielsweise aus einem Dosiersystem oder von einer Förderpumpe kommend. Hierfür sind im Stand der Technik unterschiedliche Anschlussvarianten bekannt, sodass entsprechend verschiedene Medienanschlussstücke 13, 13' bereitgestellt werden.

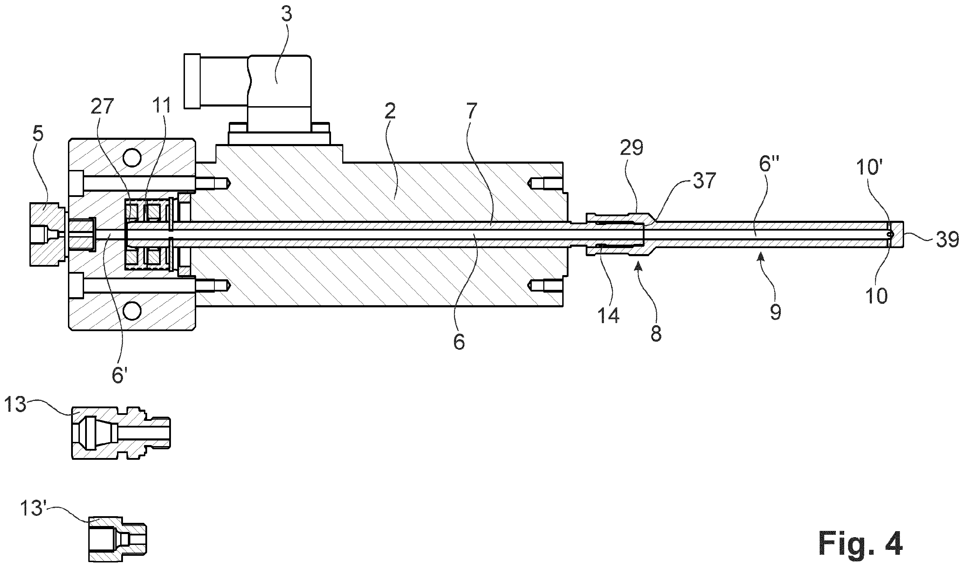

Wie insbesondere in der Schnittdarstellung der Figur 4 zu erkennen ist, ist die Ankerwelle 7 sowohl an ihrem medienanschlussseitigen Ende 27 als auch an ihrem ausbringdüsenseitigen Ende 37 aus dem Antrieb 2 herausgeführt. Ebenfalls ist zu erkennen, dass die Ankerwelle 7 eine Hohlwelle ist. Im Inneren der Hohlwelle, also der Ankerwelle 7, ist der Medienförderkanal 6 geführt. Der Medienförderkanal 6 verläuft durch die gesamte Ankerwelle 7 hindurch. Weiterhin erstreckt er sich im Bereich des Medienanschlusses 5 aus der Ankerwelle 7 heraus und ist mit dem Medienanschluss 5 verbunden. Dieser Abschnitt des Medienförderkanals wird mit dem Bezugszeichen 6' bezeichnet.

Das ausbringdüsenseitige Ende der Ankerwelle 37 ist mit einem Ausbringkopf 9 verbunden. In der dargestellten Ausführung erfolgt die Verbindung über eine Schraubverbindung 14. Entsprechend ist auf der Außenseite der Ankerwelle 7, genauer am ausbringdüsenseitigen Ende 37 der Ankerwelle, ein Außengewinde vorgesehen. Der Ausbringkopf 9 weist an seinem antriebsseitigen Ende 29 entsprechend ein Innengewinde auf.

Im Inneren des Ausbringkopfes 9 verläuft wiederum ein Medienförderkanal, bezeichnet mit dem Bezugszeichen 6". Es ist ersichtlich, dass durch die erfindungsgemäße Konstruktion ein durchgehender Medienförderkanal 6, einschließlich der Teilstücke 6', 6", vom Medienanschluss 5 bis zur Ausbringdüse 10 vorliegt.

Vorteilhaft hinsichtlich ihrer Möglichkeit der schnellen Wartung ist die direkte und unmittelbar durchgehende, in ihrer Wirkrichtung vollständig gerade Ausführung der Medienförderung. Im Betrieb auftretende Verstopfungen können mit einer Nadel auf einfachste Weise entfernt werden.

In der dargestellten Ausführung weist der Ausbringkopf 9 an seinem ausbringdüsenseitigen Ende 39 vier Ausbringdüsen 10 auf, wovon in Figur 4 zwei Ausbringdüsen 10, 10' dargestellt sind.

Die Ankerwelle 7 ist an ihrem medienanschlussseitigen Ende 27 gelagert. Hierfür ist ein Stütz- und Dichtungspaket 11 vorgesehen. Die Lagerung erfolgt momentenfrei. Die Hohlwelle dreht folglich sehr ruhig, was von entscheidendem Vorteil bei der Ausbringung des Mediums ist. Da die Ausbringdüse 10 unmittelbar mechanisch mit der Rotationsachse, also der Ankerwelle 7, verbunden ist, spiegeln sich Laufunruhen in der Rotation der Ausbringdüse wieder.

In der dargestellten Ausführung ist der Antrieb 2 ein Elektromotor, und entsprechend ist ein Steckverbinder für den elektrischen Anschluss 3 vorgesehen.

Der elektrische Antrieb 2 versetzt die Ankerwelle 7 in Rotation. Der mit der Ankerwelle 7 verbundene Ausbringkopf 9 rotiert folglich ebenfalls. Das Medium, in diesem Fall Schmierstoff, beispielsweise Schmierfett oder Schmieröl, wird über den Medienanschluss 5 in den Medienförderkanal 6, genauer zunächst in dessen Abschnitt 6', eingebracht. Das Medium bewegt sich durch den Medienförderkanal 6 hindurch, aufgrund des am Medienanschluss 5 anliegenden Drucks. Es gelangt nach Verlassen der Hohlwelle in den Abschnitt 6" des Medienförderkanals 6 und kommt so zum ausbringdüsenseitigen Ende 39 des Ausbringkopfes 9. An besagtem Ende 39 sind seitlich im Ausführungsbeispiel der Figuren 1 - 6 mehrere, genauer vier, Ausbringdüsen 10 vorgesehen. Hierbei handelt es sich in der dargestellten Ausführung um Bohrungen, die durch die Wand des Ausbringkopfes 9 hindurch bis ins Innere des Medienförderkanals 6" hinein reichen. Das bis zum Ende des Ausbringkopfes und damit bis zu dem Bereich des Ausbringkopfes 9, wo sich die Ausbringdüsen 10 befinden, geförderte Medium wird aus den Ausbringdüsen 10, die auch als Austrittsdüsen bezeichnet werden können, herausgeschleudert. Durch die Rotation der Ankerwelle 7 wird auch der Ausbringkopf 9 in Rotation versetzt, sodass Medium, das sich am ausbringdüsenseitigen Ende 39 des Ausbringkopfes 9 befindet, durch die Ausbringdüsen 10 austritt und aufgrund der Rotation herausgeschleudert wird. Genauso wie bei aus dem Stand der Technik bekannten Rotorbefetteinheiten bestimmt die Drehgeschwindigkeit des Ausbringkopfes 9 die Wurfweite des ausgeschleuderten Mediums. Je höher die Drehzahl, desto weiter weg wird das Medium herausgeschleudert. Ebenfalls selbstverständlich ist dabei für einen Fachmann, dass das Medium kegelförmig herausgeschleudert wird und entsprechend die benetzte Fläche größer wird, je weiter weg sie sich vom Ausbringkopf befindet.

Aus den dargestellten Zeichnungen der Figuren 1 - 6 ergibt sich für einen Fachmann unmittelbar auch, dass der Ausbringkopf 9 in seiner Rotationszahl identisch ist mit der Drehzahl der Ankerwelle. Dies hat den Vorteil, dass durch eine simple Drehzahlüberwachung des Antriebs 2 gleichzeitig die Drehzahl des Ausbringkopfes 9 überwacht ist. Ferner hat diese direkte Übertragbarkeit den Vorteil, dass eine feinste und genaueste Regulierung der Drehzahl und damit des Benetzungsvorgangs möglich ist.

Es sei ergänzend noch erwähnt, dass der Förderdruck nicht durch die Rotorbefetteinheit selbst bestimmt wird, sondern sich ausschließlich aus vorgelagerten Fördersystemen, ggf. durch Dosiersysteme hindurch, bestimmt. Die erfindungsgemäße Vorrichtung leitet das Medium zur Ausbringdüse 10 und bringt es aus, wobei Form des Auswurfs, Geschwindigkeit, Wurfweite etc. insbesondere durch die Motordrehzahl und auch durch den am Medienanschluss anliegenden Förderdruck, aber auch durch Größe und Form der Ausbringdüse 10 bestimmt werden.

Aus den Zeichnungen ergibt sich außerdem, warum die Vorrichtung der vorliegenden Erfindung so wenig Bauraum beansprucht. Anders als bei sämtlichen vorbekannten Vorrichtungen wird lediglich ein Ausbringkopf zum Anschluss an die rotierende Hohlwelle benötigt, wobei in dessen Innerem der Medienförderkanal verläuft. Es bedarf keiner außenliegenden Hülle um die rotierende Welle herum, wie es beispielsweise bekannt ist aus der DE 10 2018 216 483 A1 oder der CN 107983595 A, noch bedarf es zusätzlichen Platzes für irgendwelche außen geführten Medienzuführvorrichtungen wie beispielsweise bekannt aus der WO 2017/050436 A1 oder der WO 2007/006325 A1.

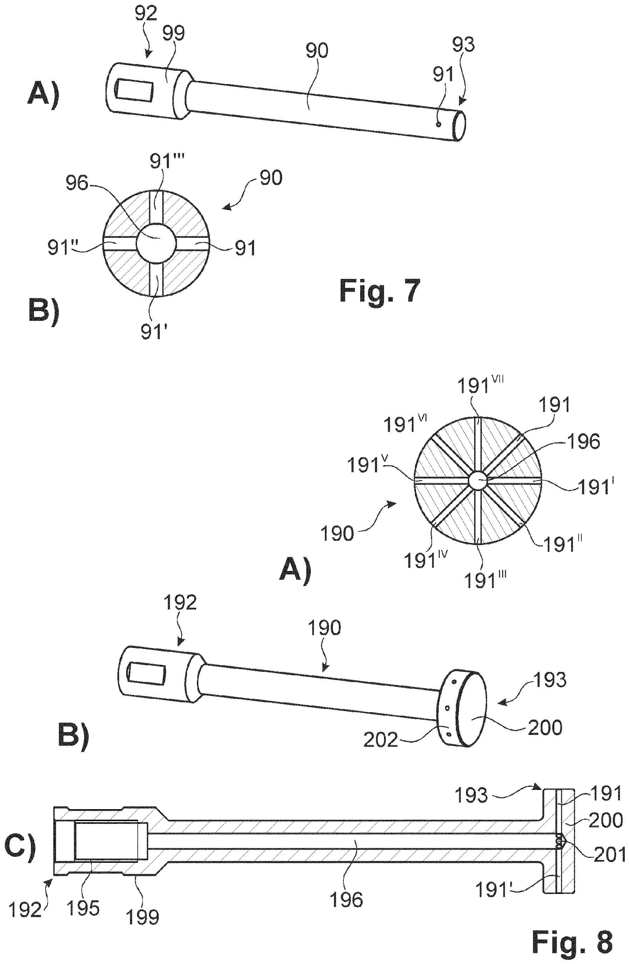

In den Figuren 7 - 10 sind jeweils Ausführungsbeispiele unterschiedlicher Ausbringköpfe dargestellt. Sämtliche dieser Ausbringköpfe können über die Verbindungsstelle 8 mit der Ankerwelle 7 verbunden werden.

Figur 7 zeigt einen Ausbringkopf 90, sowohl in perspektivischer Darstellung (Figur 7A) als auch einen Querschnitt im Bereich des ausbringdüsenseitigen Endes des Ausbringkopfes 39, genauer durch die Ausbringdüsen 91, 91', 91", 91 "' hindurch. Wie am Schnitt der Figur 7B zu erkennen ist, mündet der Medienförderkanal 96 in die Ausbringdüsen 91. Im Ausführungsbeispiel der Figur 7 sind vier Ausbringdüsen 91, 91', 91", 91'" vorgesehen, die jeweils gleich verteilt um den Umfang des Ausbringkopfes herum und damit um den Umfang des Medienförderkanals 96 herum angeordnet sind. Am antriebsseitigen Ende des Ausbringkopfes 92 ist zur Schaffung der Verbindung 8 mit der Ankerwelle 7 ein entsprechendes Anschlussstück 99 vorgesehen, in dessen Innenbereich ein Innengewinde angeordnet ist, das in Figur 7 nicht dargestellt ist.

Figur 8 zeigt ein Ausführungsbeispiel eines Ausbringkopfes 190, bei welchem insgesamt acht Ausbringdüsen 191 vorgesehen sind. Wiederum sind die Ausbringdüsen 191, 191^{I}, 191^{II}, 191^{III}, 191^{IV}, 191^{V}, 191^{VI}, 191^{VII} gleichmäßig verteilt, um den Umfang des Ausbringkopfes 190 herum angeordnet, und damit auch um den Medienförderkanal 196 herum.

Es sei darauf hingewiesen, dass die Zeichnungen maßstäblich nicht korrekt sind. Das ausbringdüsenseitige Ende des Ausbringkopfes 193 hat in der Realität einen größeren Durchmesser als das ausbringdüsenseitige Ende 93. Die Figuren 7B und 8A sind zwar ähnlich groß dargestellt, aber, da die Darstellung nicht maßstabsgerecht ist, darf nicht auf irgendwelche Maße geschlossen werden. Die Darstellung der Figur 7B ist vergleichsweise stärker vergrößert als jene von Figur 8A.

Der Ausbringkopf 190 weist an seinem ausbringdüsenseitigen Ende 193 einen im Durchmesser vergrößerten Abschnitt auf, der im Rahmen der vorliegenden Erfindung als Fuß bezeichnet und mit dem Bezugszeichen 200 versehen ist. Im Inneren des Ausbringkopfes 190 verläuft der ausbringkopfseitige Abschnitt des Medienförderkanals 196. Über Bohrungen 201 tritt das auszubringende Medium in die Ausbringdüsen 191 ein, durch welche es entsprechend den Ausbringkopf verlässt. Die Ausbringdüsen 191 können beispielsweise durch Bohrungen hergestellt sein.

In der Darstellung von Figur 8C ist das Innengewinde 195 am antriebsseitigen Ende des Ausbringkopfes 192 dargestellt. Wie bereits erläutert, wird dieses Innengewinde 195 mit dem entsprechenden Außengewinde auf der Ankerwelle 7 an dessen ausbringdüsenseitigem Ende 37 verbunden zur Schraubverbindung 14. Durch die Durchmesservergrößerung am ausbringdüsenseitigen Ende 193 des Ausbringkopfes 190 können auch größere Innenzylinder oder ähnliche Hohlräume mit Medium wie beispielsweise Schmieröl oder Klebstoff benetzt werden. Außerdem lassen sich auf dem entsprechend vergrößerten Umfang 202 eine Mehrzahl an Ausbringdüsen, auch genannt Austrittsdüsen vorsehen; bei der vorliegenden Ausführung sind es acht Stück.

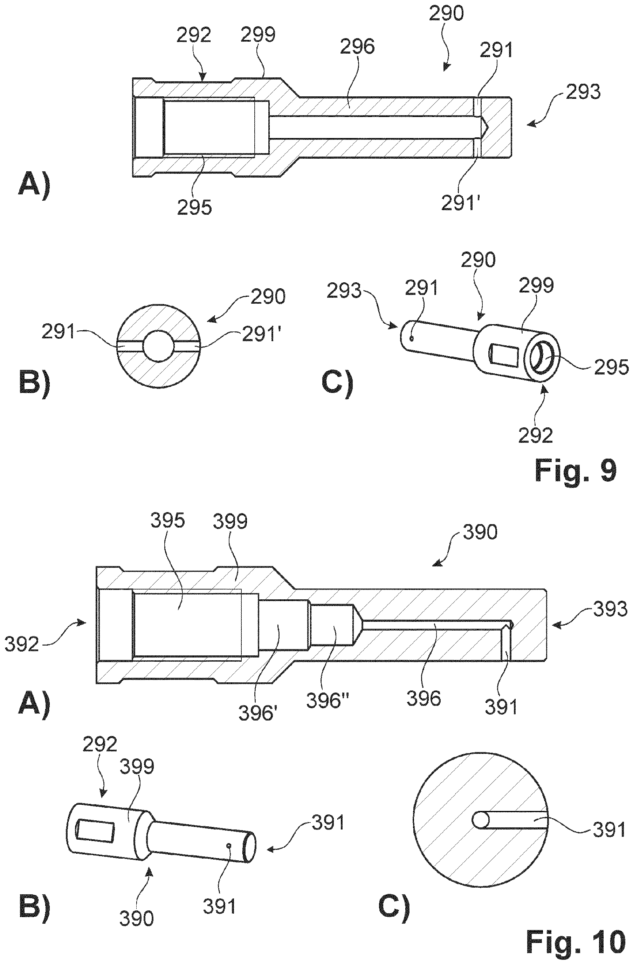

Bei den Ausbringköpfen 90 und 190 der Ausführungsbeispiele der Figuren 7 und 8 handelt es sich jeweils um verhältnismäßig lange Ausbringköpfe. Die Figuren 9 und 10 zeigen im Vergleich dazu kürzer gebaute Ausbringköpfe. Insbesondere bei Roboteranwendungen, d. h., wenn die Rotorbefetteinheit 1 an einem Roboterarm befestigt und von diesem bewegt werden soll, ist es wichtig, dass das gesamte Gerät möglichst klein baut. Während die längeren Ausbringköpfe 90 und 190 beispielsweise sehr nützlich sein können, um tiefe Hohlräume zu erreichen, ist es für viele Anwendungen ausreichend, wenn ein entsprechend kürzer gebauter Ausbringkopf eingesetzt werden kann.

Der Ausbringkopf 290 in Figur 9 weist zwei Ausbringdüsen 291, 291' auf, wohingegen der Ausbringkopf 390 in Figur 10 lediglich eine einzige Ausbringdüse 391 aufweist.

Figur 10 zeigt ein Ausführungsbeispiel, bei welchem sich der Medienförderkanal 396 in verschiedene Abschnitte innerhalb des Ausbringkopfes 390 gliedert. Der Medienförderkanal 396 verjüngt sich auf diese Art und Weise zunehmend, d. h., sein Durchmesser wird von Abschnitt zu Abschnitt geringer. Hierfür sind zwei Reduzierabschnitte 396' und 396" vorgesehen. Auf diese Art und Weise erfolgt die Querschnittreduktion nicht erst dort, wo die Bohrungen zum Übertritt vom Medienförderkanal, beispielsweise 296, in die entsprechenden Ausbringdüsen, beispielsweise 291, 291' platziert sind, sondern bereits im Vorfeld davon, sodass noch ein Stück des Medienförderkanals 396 mit einem verhältnismäßig kleinen Durchmesser, der in etwa dem Durchmesser der Ausbringdüse 391 entspricht, vorgesehen ist. Hierdurch kommt es nicht zu einem Medienstau im Bereich der Ausbringdüse 391, sondern das dort anstehende Medium wird unmittelbar und gleichmäßig ausgebracht. Mit dem Ausführungsbeispiel der Figur 10 lassen sich besonders feine Benetzungen in der Art einer einzelnen feinen, dünnen Spur erzeugen.

Die in den einzelnen Figuren gezeigten Ausgestaltungsmöglichkeiten lassen sich auch untereinander in beliebiger Form verbinden.

### Bezugszeichenliste

- **Nr.**: **Merkmal**
- 1: Vorrichtung zum Ausbringen eines flüssigen oder pastösen Mediums, insbesondere Rotorbefetteinheit
- 2: Antrieb
- 3: Steckverbinder
- 4: Anschlusselement
- 5: Medienanschluss
- 6, 96, 196, 296, 396: Medienförderkanal
- 7: Ankerwelle
- 8: Verbindungsstelle
- 9, 90, 190, 290 ,390: Ausbringkopf
- 10, 91, 191, 291, 391: Ausbringdüse
- 11: Stütz- und Dichtungspaket
- 13, 13': Medienanschlussstück
- 14: Schraubverbindung
- 27: medienanschlussseitiges Ende der Ankerwelle
- 29, 92, 192, 292, 392: antriebsseitiges Ende des Ausbringkopfes
- 37: ausbringdüsenseitiges Ende der Ankerwelle
- 39, 93, 193, 293, 393: ausbringdüsenseitiges Ende des Ausbringkopfes
- 99, 199, 299, 399: Anschlussstück
- 195, 295, 395: Innengewinde
- 200: Fuß
- 201: Bohrung
- 202: Umfang

## Patentansprüche

1. Vorrichtung (1) zum Ausbringen eines flüssigen oder pastösen Mediums, insbesondere Schmierstoff, Schmierfett, Schmieröl, Klebstoff, Dichtstoff oder Funktionswerkstoff, wobei die Vorrichtung so ausgelegt ist, dass ein maximales Volumen des Mediums von 100 g/min, insbesondere von 60 g/min, ausgebracht werden kann,
wobei das Ausbringen durch eine rotierende Bewegung erfolgt und insbesondere zum Benetzen eines Hohlraumes mit dem Medium dient,
umfassend
zumindest einen Medienförderkanal (6, 96, 196, 296, 396), in welchem das auszubringende Medium gefördert werden kann,
einen Antrieb (2), insbesondere ein Elektromotor, mit einer Ankerwelle (7), welche rotierbar ist, und
eine Ausbringdüse (10, 91, 191, 291, 391), aus welcher das Medium ausbringbar ist,
**dadurch gekennzeichnet, dass**
die Ankerwelle des Antriebs eine Hohlwelle ist, in deren Inneren der zumindest eine Medienförderkanal zumindest teilweise verläuft,
wobei die Ankerwelle durch den Antrieb hindurch und aus ihm heraus geführt ist, und dass das Medium aus dem zumindest einen Medienförderkanal durch die Ausbringdüse hindurch ausbringbar ist.

2. Vorrichtung nach Patentspruch 1,
**dadurch gekennzeichnet, dass**
die Ausbringdüse (10, 91, 191, 291, 391) mit der Ankerwelle (7) kupplungsfrei und/oder drehdurchführungsfrei und/oder drehlagerfrei verbunden ist.

3. Vorrichtung nach Patentanspruch 1 oder 2,
**dadurch gekennzeichnet, dass**
die Ausbringdüse (10, 91, 191, 291, 391) mit der Ankerwelle (7) über eine Schraubverbindung (14) lösbar verbunden ist, wobei insbesondere an eine ausbringdüsenseitigen Ende (37) der Ankerwelle sowohl auf einer Außenseite als auch auf einer Innenseite der Ankerwelle jeweils bereichsweise ein Gewinde vorgesehen ist.

4. Vorrichtung nach einem der vorstehenden Patentansprüche,
**dadurch gekennzeichnet, dass**
eine Drehzahlüberwachung und -regelung für den Antrieb (2) vorgesehen ist, wobei über eine Einstellung und/oder Veränderung einer Drehzahl der Ankerwelle (7) die rotierende Bewegung zu dem Ausbringen des Mediums einstellbar und/oder veränderbar ist.

5. Vorrichtung nach einem der vorstehenden Patentansprüche,
**dadurch gekennzeichnet, dass**
die Ausbringdüse (10, 91, 191, 291, 391) Teil eines Ausbringkopfes (9, 90, 190, 290, 390) ist, welcher insbesondere eine Prallscheibe oder einen Aufnahmebehälter mit zumindest einer insbesondere seitlichen Öffnung als Ausbringdüse, bevorzugt mit mehreren um einen Umfang des Aufnahmebehälters verteilt angeordneten Öffnungen als Ausbringdüsen, aufweist.

6. Vorrichtung nach einem der vorstehenden Patentansprüche,
**dadurch gekennzeichnet, dass**
die Ankerwelle (7) momentenfrei gelagert ist.

7. Vorrichtung nach einem der vorstehenden Patentansprüche,
**dadurch gekennzeichnet, dass**
eine Dosiervorrichtung, insbesondere eine Mehrkammerdosiervorrichtung oder eine Mehrkomponentendosiervorrichtung, vorgesehen ist, welche auf einer Eingangsseite der Ankerwelle angeordnet und mit ihr verbunden ist, wodurch eine Mediendosierung und/oder eine Mischung und das Ausbringen von mehreren Komponenten, erfolgen kann.

8. Vorrichtung nach Patentanspruch 7,
**dadurch gekennzeichnet, dass**
zumindest ein Stellventil, ein Rückschlagventil und/oder eine Dichtung vorgesehen sind, so dass ein Rückfluss des Mediums zu der Dosiervorrichtung verhinderbar ist.

9. Vorrichtung nach einem der vorstehenden Patentansprüche,
**dadurch gekennzeichnet, dass**
mehrere Medienförderkanäle (6, 96, 196, 296, 396) vorhanden sind, die parallel in der Ankerwelle (7) verlaufen und die ausgangsseitig zusammengeführt sind und die in eine einzige Ausbringdüse (10, 91, 191, 291, 391) münden, so dass in jedem Medienförderkanal eine eigene Art an Medium förderbar ist, die vor dem Ausbringen vermischbar sind.

10. Vorrichtung nach einem der vorstehenden Patentansprüche,
**dadurch gekennzeichnet, dass**
ein Sensor, eine Sichtanzeige und/oder ein Messsystem ausgangsseitig angeordnet sind, wodurch das Ausbringen des Mediums, insbesondere dessen Abgabemenge, Temperatur, Reinheit, Viskosität, Homogenität und/oder ein Vorhandensein von Lufteinschlüssen, überwachbar ist.

11. Vorrichtung nach einem der vorstehenden Patentansprüche,
**dadurch gekennzeichnet, dass**
ein Heiz- und/oder Kühlsystem vorgesehen ist, wodurch der zumindest eine Medienförderkanal (6, 96, 196, 296, 396) beheizbar und/oder kühlbar ist, um die Temperatur und damit die Viskosität des Mediums zu vergleichmäßigen.

12. Vorrichtung nach einem der vorstehenden Patentansprüche,
**dadurch gekennzeichnet, dass**
der zumindest eine Medienförderkanal (6, 96, 196, 296, 396) mit der Ankerwelle (7) fest verbunden ist oder Teil derselben ist oder in Form einer Durchgangsbohrung in der Ankerwelle hergestellt ist, so dass er mit der Ankerwelle rotiert.

13. Verfahren zum Ausbringen eines flüssigen oder pastösen Mediums, insbesondere Schmierstoff, Schmierfett, Schmieröl, Klebstoff, Dichtstoff oder Funktionswerkstoff, wobei ein maximales Volumen des Mediums von 100 g/min, insbesondere von 60 g/min, ausgebracht wird,
wobei das Ausbringen durch eine rotierende Bewegung erfolgt,
und wobei das Medium in zumindest einen Medienförderkanal (6, 96, 196, 296, 396) eingebracht, in diesem gefördert und aus diesem über eine Ausbringdüse (10, 91, 191, 291, 391) und durch diese hindurch ausgebracht wird,
**dadurch gekennzeichnet, dass**
die rotierende Bewegung durch eine rotierende Hohlwelle erzeugt wird, wobei die rotierende Hohlwelle eine Ankerwelle (7) eines Antriebs (2), insbesondere eines Elektromotors, ist, welche durch den Antrieb hindurch und aus ihm heraus geführt ist, und dass der zumindest eine Medienförderkanal in einem Inneren der Hohlwelle zumindest teilweise verläuft.

14. Verfahren nach Patentanspruch 12,
**dadurch gekennzeichnet, dass**
durch die rotierende Bewegung ein Hohlraum, eine Vertiefung in einem Bauteil oder ein Innenzylinder mit dem Medium zumindest teilweise benetzt wird.
